# EUROPEAN PATENT APPLICATION

(11) **EP 0 856 501 A1**
(43) Date of publication of application: **05.08.1998**
(21) Application number: 96913708.2
(22) Date of filing: 09.05.1996
(51) Int. Cl.: C04B 41/68, C09D 1/04

(54) **METHOD AND AGENT FOR TREATING CALCIUM-CONTAINING INORGANIC MATERIAL**

(30) Priority: 16.10.1995 JP 267558/95
(71) Applicant: P & E International Inc., Katsushika-ku, Tokyo 124 (JP); Kobayashi, Takehiko, Tokyo 160 (JP)
(72) Inventor: KOBAYASHI, Takehiko, Tokyo 146 (JP); AGIO, Shinichi, Niigata 940 (JP); IWAMA, Katsumi, Kanagawa 238-03 (JP); TSUCHIDA, Uichi, Niigata 954 (JP); MOROSATO, Masashi, Tokyo 164 (JP)
(74) Representative: March, Gary Clifford
(86) International application number: JP9601224
(87) International publication number: WO9714664

(57) **Abstract**

A treatment agent and a method of treating a calcium-containing inorganic material using said treating agent, the method and the agent being capable of increasing the weather resistance and strength of the calcium-containing inorganic material and coloring the calcium-containing inorganic material in a manner easy to apply and resistant to weather damage.

The treatment agent is a mixture basically comprising a water-soluble silicate compound represented by M₂O·nSiO₂ and either one of or both an organic acid and a salt of an organic acid. The organic acid may preferably be such a polycarboxylic acid having two or more carboxyl groups that its pH changes in a range of approximately ±1.0 when mixed with an alkaline aqueous solution. A salt of an organic acid is also applicable. In cases where the surface of the inorganic material is contaminated by oil, a fluorine-type surface active agent is added. In cases where the inorganic material is to be colored, a pigment is added. When the treatment agent is applied or sprayed onto the inorganic material, the organic acid permits the agent to permeate so that the water-soluble silicate compound reacts with calcium hydroxide in the inorganic material, thereby producing calcium silicate, which is water resistant. In cases where a pigment has been added, the pigment is affixed to the calcium silicate.

## Description

### TECHNICAL FIELD

The present invention relates to a method of treating calcium-containing inorganic materials such as concrete and a treatment agent to be used in said method. More particularly, the invention relates to a treatment method and a treatment agent for preventing deterioration of, coloring or otherwise treating the surface of said inorganic materials.

### BACKGROUND ART

It is conventionally practiced to treat inorganic materials such as concrete, a rock wall or a rocky terrain which are prone to gradual deterioration and weathering due to damages by sea water, invasion and freezing of rain water, acid rain and other causes. There are various treatments for this purpose, including forming a protective layer on the surface of the inorganic material by coating the surface with paint or a packing agent which are mainly composed of an inorganic substance or a polymer or polymers, filling existing cracks with resin or other suitable materials, and bonding together peeling or flaking inorganic materials with an adhesive such as resin. However, in case of concrete or other materials which have only small pores on the surface, paint is hard to invade into these materials and is prone to peeling off. When conducting a simple repair using just a resin or the like, too, the resin often does not permeate the concrete, resulting in cracks or peeling afterwards. Concrete made of Portland cement used in a general construction contains about 25 Wt % of calcium hydroxide (Ca(OH)₂), which is prone to reacting with acid. Therefore, a need exists for such concrete to be more weather resistant. Furthermore, as concrete continues to harden for a long period of time while being carbonized, there is also the danger of reinforcing bars or other materials embedded in the concrete gradually corroding, thereby reducing the strength of the building itself.

An example of conventional method of treating such an inorganic material to repair or prevent deterioration of its surface is disclosed in Japanese Patent Publication No. 11988/1982 (JP11988/1982). The method described in said JP11988/1982 calls for applying a water-soluble silicate compound to an inorganic material and allowing the compound to permeate the inorganic material thoroughly, and then coating the inorganic material with cement paste.

Like other conventional methods using a paste or a resin, however, the inorganic material treating method disclosed in JP 57-11988, has such a drawback that the water-soluble silicate compound cannot easily permeate the inorganic material having small pores, such as concrete or the like. In other words, the method is not only incapable of improved prevention of the surface deterioration of concrete but also presents a problem of being complicated in procedure, because it requires cement paste coating after application of a water-soluble silicate compound.

In order to solve the above problems, an object of the present invention is to provide an easy and convenient method of treating a calcium-containing inorganic material and a treatment agent for use in such a method, said method and agent being capable of easily increasing the weather resistance and strength of the calcium-containing inorganic material. Another object of the invention is to provide a treatment method and an agent for the same, which are capable of coloring a calcium-containing inorganic material in a manner resistant to weather damage.

### DISCLOSURE OF THE INVENTION

A treatment agent for treating a calcium-containing inorganic material according to the invention contains a water-soluble silicate compound and either one of or both an organic acid and a salt of an organic acid.

High surface activity effect and high permeability of the organic acid or the organic acid salt permit the water-soluble silicate compound to permeate the calcium-containing inorganic material without the danger of forming bubbles or increasing the viscosity and to react therein with the calcium which is contained in the calcium-containing inorganic material so as to generate calcium silicate.

According to the invention, by means of mixing one of or both an organic acid and a salt of an organic acid with a water-soluble silicate compound without the danger of forming bubbles or increasing the viscosity, the water-soluble silicate compound to react with calcium in a calcium-containing inorganic material is allowed to permeate deeply into the calcium-containing inorganic material so that water resistant calcium silicate generated from the water-soluble silicate compound blocks the open pores of the calcium-containing inorganic material and thus increases the solidity of the inorganic material, thereby increasing its weather resistance and the strength.

According to another feature of the invention, each of the aforementioned organic acid and organic acid salt includes two or more carboxyl groups.

When mixed with a water-soluble silicate compound, the organic acid or organic acid salt each having two or more carboxyl groups reduces the viscosity of the agent, thereby increasing the permeability and the dispersibility of the water-soluble silicate compound into the calcium-containing inorganic material.

As described above, by using an organic acid or an organic acid salt each having two or more carboxyl groups, the invention is capable of reducing the viscosity of the water-soluble silicate compound when the organic acid or the organic acid salt is mixed therewith, thereby increasing the permeability and the dispersibility of the water-soluble silicate compound into the calcium-containing inorganic material.

According to yet another feature of the invention, a fluorine-type surface active agent is included in the invention described above.

The fluorine-type surface active agent enables a water-soluble silicate compound to permeate the calcium-containing inorganic material without causing changes in quality of the calcium-containing inorganic material or the water-soluble silicate compound even in cases where the surface of a calcium-containing inorganic material is contaminated by oil or the like.

Therefore, by means of including a fluorine-type surface active agent, the invention provides easy permeation of a water-soluble silicate compound into a calcium-containing inorganic material without causing changes in quality of the calcium-containing inorganic material or the water-soluble silicate compound even in cases where the surface of the calcium-containing inorganic material is contaminated by oil or the like.

According to yet another feature of the invention, a pigment is included in the invention described above.

The pigment permeates a calcium-containing inorganic material together with a water-soluble silicate compound and colors the calcium-containing inorganic material well and virtually evenly without the danger of the pigment peeling off or being otherwise removed from the surface of the calcium-containing inorganic material. As a result, not only increasing the weather resistance and the strength of the calcium-containing inorganic material, but the invention also expands the range of usage of the calcium-containing inorganic material by means of coloring the material so as to improve it from an aesthetic point of view and also make it easy to differentiate.

Therefore, by means of including a pigment, the invention permits both a water-soluble silicate compound and the pigment to permeate a calcium-containing inorganic material, and the pigment becomes secured by the generated calcium silicate so that the calcium-containing inorganic material can be colored well and virtually evenly without the danger of the pigment peeling off or being otherwise removed from the surface of the calcium-containing inorganic material. As a result, the invention not only increases the weather resistance and the strength of the calcium-containing inorganic material but also expands the range of usage of the calcium-containing inorganic material by means of coloring the material so as to improve it from an aesthetic point of view and also make it easy to differentiate.

According to yet another feature of the invention, the degree of basicity of each one of the organic acids and the organic acid salts is not less than 2.

The organic acid or the organic acid salt having a basicity of 2 or more increases permeability of a water-soluble silicate compound and a pigment into a calcium-containing inorganic material.

In other words, by using an organic acid or an organic acid salt having a basicity of 2 or more, the invention is capable of increasing even further permeability of a water-soluble silicate compound and a pigment into a calcium-containing inorganic material.

According to yet another feature of the invention, the organic acid or the organic acid salt is a polybasic acid selected from a group consisting of spiculisporic acid, salts of spiculisporic acid and derivatives of said spiculisporic acid and spiculisporic acid salts.

Any one of these spiculisporic acid, salts of spiculisporic acid and derivatives of the same permits a pigment to be easily mixed with a water-soluble silicate compound nearly evenly and further increases its permeability into a calcium-containing inorganic material without the danger of pigment particles coagulating.

In other words, by using at least one of the polybasic acids selected from a group consisting of spiculisporic acid, salts of spiculisporic acid and derivatives of said spiculisporic acid and spiculisporic acid salts as the organic acid or the organic acid salt, the invention is capable of enabling a pigment to be easily mixed with a water-soluble silicate compound nearly evenly without the danger of pigment particles coagulating, and further increasing its permeability and dispersibility into a calcium-containing inorganic material.

Yet another feature of the invention is to impregnate a calcium-containing inorganic material with an agent for treating a calcium-containing inorganic material according to the invention described above by applying or spraying said treatment agent onto the surface of the calcium-containing inorganic material.

As an agent for treating a calcium-containing inorganic material is caused to be contained in the calcium-containing inorganic material by means of applying or spraying said treatment agent onto the surface of the calcium-containing inorganic material, treatment such as one for preventing surface deterioration of a calcium-containing inorganic material or coloring a calcium-containing inorganic material can be conducted easily, thereby providing an improved method of treatment.

Therefore, as the invention calls for impregnating a calcium-containing inorganic material with a treatment agent for the calcium-containing inorganic material by means of applying or spraying said treatment agent onto the surface of the calcium-containing inorganic material, the invention provides an improved method of treatment by facilitating such a treatment as one for preventing surface deterioration of a calcium-containing inorganic material or coloring a calcium-containing inorganic material.

### BEST MODE FOR CARRYING OUT THE INVENTION

In order to explain the invention in detail, the configuration of a first embodiment of the invention is explained hereunder.

A treatment agent for treating a calcium-containing inorganic material is a mixture generally comprised of a water-soluble silicate compound and either one of or both an organic acid and a salt of an organic acid.

A water-soluble silicate compound mentioned above means a silicate used singularly or as a mixture of silicates, the silicate represented by the following general formula:

M₂O·nSiO₂

wherein M represents an element selected from a group consisting of lithium (Li), potassium (K), sodium (Na), cesium (Cs) and ammonium, and n represents an integer number.

The molar ratio of M₂O·nSiO₂ is preferably from about 3.5 to 3.6, because a water-soluble silicate compound having a molar ratio within the above range exists in the form of a monosilicate and therefore has extremely low viscosity.

Examples of ammonium used for the composition include a primary amine such as methylamine or ethylamine, a secondary amine such as dimethylamine or diisopropylamine, a tertiary amine such as trimethylamine or triethanolamine, a quaternary amine such as monomethyltriethanol ammonium or tetraethanol ammonium, and ammonia.

The value n is in the range from 2 to 5, preferably 3 or 4. When n is 1, the composition does not properly react with calcium hydroxide. On the other hand, in cases where n exceeds 5, the substance is highly viscous and difficult to permeate an inorganic material. Therefore, a water-soluble silicate compound with n from 2 to 5, preferably 3 or 4, is used according to the embodiment. However, it should be understood that n is not limited. As lithium silicate has the best water resistant property, it is recommended to use lithium silicate in cases where water resistance property is especially important.

An organic acid may preferably have a property such that when mixed with an alkali aqueous solution having a pH 8 or more, the pH change of the alkali aqueous solution remains within the range of approximately ±1.0 because of buffer action. Organic acids having characteristics as above may have such groups as -COOH (carboxyl), -(C)OOH (carboxyl), -CSOH (thiocarboxyl), -CSSH (dithiocarboxyl), -(C)SSH (dithiocarboxyl), -SO₃H (sulfo), -SO₂H (sulfinyl) or -SOH (sulfenyl), examples of which include adipic acid, acridinic acid, aconitic acid, ascorbic acid, aspartic acid, azelaic acid, isocarbonic acid, itaconic acid, 1,2-ethane disulfonic acid, ethyl boric acid, ethyl malonic acid, oxalaoetic acid, 3-oxoglutaric acid, carboxy cinnamic acid, citric acid, glutaric acid, croconic acid, chlorobenzoic acid, chlorosuccinic acid, chlorobenzene sulfonic acid, spiculisporic acid (4,5-dicarboxy-4-pentadecanolido: hereinafter referred to as S-acid), and ring opening acid (3-hydroxy-1,3,4-tetradecan tricarbon acid: hereinafter referred to as O-acid), which is a spiculisporic acid derivative produced by opening the lactone ring of spiculisporic acid, as well as salts of these organic acids, such as lithium salts, sodium salts, potassium salts and cesium salts thereof.

All of the above organic acids and organic acid salts are water soluble, react with neither a water-soluble silicate compound nor with a calcium-containing inorganic material containing calcium compound, are highly permeative into an inorganic material because of their excellent surface activity effect, and are free from the danger of viscosity increase when mixed with a water-soluble silicate compound because they have no foamability. Thus, any one of these organic acids or their salts are capable of function as an excellent carrier for a water-soluble silicate compound to permeate an inorganic material.

The most preferable organic acid used for the invention is a polycarboxylic acid having two or more carboxyl groups, such as the one represented by the following chemical formula: 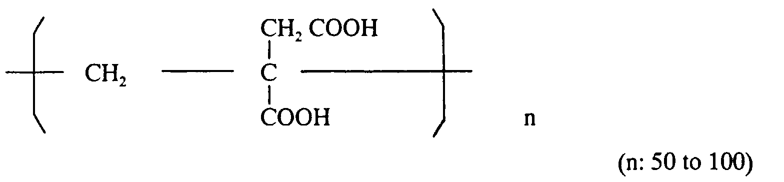 An organic salt having a plurality of carboxyl groups as above has an excellent surface activity effect on a water-soluble silicate compound so that it reduces the dynamic viscosity of the water-soluble silicate compound after being mixed with the same. As such an organic acid also has superior dispersibility, it improves permeability of a water-soluble silicate compound into an organic material as well as its dispersibility after the permeation into the organic material.

The selected organic acid or the organic acid salt is mixed with a water-soluble silicate compound at the ratio of 0.01 to 2.0 wt % of the amount of solid in the water-soluble silicate compound. This is because a mixing ratio of the organic acid or the organic acid salt of less than 0.01 wt% impairs the permeability of the water-soluble silicate compound into an inorganic material, while a mixing ratio exceeding 2.0 wt% undesirably increases costs due to the excessive permeability. The mixing ratio may preferably be in the range between 0.05 wt% and 1.0 wt%.

Next, the function of the first embodiment described above is explained hereunder.

A treatment agent for an inorganic material is produced by mixing an organic acid or a salt of an organic acid with a water-soluble silicate compound at the mixing ratio of 0.01 to 2.0 wt% of the amount of solid in the water-soluble silicate compound. At that time, its surface activity to the water-soluble silicate compound allows the water soluble organic acid or the organic acid salt to be evenly mixed with the water-soluble silicate compound. A treatment operation may then be conducted to an inorganic material such as concrete, a rock wall or a rocky terrain by coating, spraying or otherwise applying the agent onto the inorganic material. Because of the surface activity effect and the permeability of the organic acid or the organic acid salt used as well as the dispersibility of said organic acid or organic acid salt having a plurality of carboxyl groups, the agent adhering to the surface of the inorganic material by the above treatment operation gradually permeates from open pores into the deep part of the inorganic material. The water-soluble silicate compound having permeated the inorganic material reacts with calcium hydroxide (Ca(OH)₂), which is the calcium contained in the inorganic material, thereby producing water-resistant calcium silicate in the pores into which the water-soluble silicate compound has permeated. As the calcium silicate produced in these pores block the pores, the water resistance capacity, structure density, and consequently the strength of the inorganic material are increased.

This treatment is also capable of preventing surface deterioration of an inorganic material by reducing heat deterioration which may result from acid rain or fire and, in cases where the inorganic material is concrete, reducing efflorescence which is characteristic of concrete.

As permeation into the deep part of the inorganic material is possible, even if it rains after the treatment operation using the above treatment agent, the surface of the material is free from the danger of decrease in the Mohs' hardness or changes in the alkalinity.

Next, a second embodiment of the present invention is explained hereunder.

According to the second embodiment, a pigment for coloring the inorganic material is mixed in a treatment agent which consists of a mixture of a water-soluble silicate compound and an organic acid or an organic acid salt as in the first embodiment described above.

As a water-soluble silicate compound is alkaline, a pigment used according to the second embodiment should be alkali resistant and may preferably have superior weather resistance. Examples of pigments include various inorganic pigments, such as zinc yellow, red lead, chrome yellow, cadmium red, cadmium yellow, cobalt blue, viridian, white lead, ultramarine, titanium oxide, black iron oxide, red iron oxide, alumina white, titanium black, lithopone and carbon black, and organic pigments, such as alizarin lake, indanthrene blue, eosine lake, quinacridone red, quinacridone violet, copper phthalocyanine type pigments, naphthol green and diamond black. Regardless of whether it is a natural pigment or a synthetic product, any pigment may be used, provided it is alkali resistant.

In case of an inorganic material whose open pores are small, such as concrete, the pigment tends to flocculate, because the pigment is used in the form of very fine powder (preferably 0.5 µm or less) in order to assure the pigment to properly seeped into the pores. For this reason, the organic acid or the organic acid used have the capability of restraining flocculation of the pigment and may therefore preferably be selected from among polybasic acids which are high molecular surface active agents, such as S-acid and O-acid, as well as lithium salts, sodium salts, potassium salts and cesium salts of these acids.

A treatment agent is produced by mixing the water-soluble silicate compound, the polybasic acid and the pigment described as above, and a treatment operation may then be conducted to an inorganic material by means of coating, spraying or otherwise applying the agent onto the inorganic material. When the treatment agent is produced, the pigment is allowed to disperse properly, flocculation of the pigment prevented by the polybasic acid, and the surface active effect of the water soluble polybasic acid on the water-soluble silicate compound allows the pigment to be evenly dispersed and mixed. Thus produced agent was applied, sprayed or otherwise used to treat such an inorganic material as concrete, a rock wall or a rocky terrain.

The agent adhering to the surface of the inorganic material by the above treatment gradually permeates from open pores into the deep part of the inorganic material due to the surface activity effect and the permeability of the polybasic acid as well as the high dispersibility of said polybasic acid that has a plurality of carboxyl groups. The water-soluble silicate compound having permeated the inorganic material reacts with calcium hydroxide (Ca(OH)₂), which is the calcium contained in the inorganic material, and produces water-resistant calcium silicate in the pores into which the water-soluble silicate compound has permeated, the pigment permeated together with the water-soluble silicate compound being enveloped and secured in the calcium silicate. Therefore, in addition to being capable of increasing the water resistance capacity, structure density, the strength and consequently preventing surface deterioration of the inorganic material by means of blocking the pores with the calcium silicate generated therein, the second embodiment described above is also capable of coloring the inorganic material to resemble natural stone. As a way to differentiate pieces of material is provided by means of coloring as above, the second embodiment effectively expands the range of usage of the material; for example, colored pieces may be used to form a partition line, in a mural painting, and so forth.

Next, a third embodiment is explained hereunder.

A treatment agent according to the third embodiment may effectively be used in cases where an inorganic material such as concrete is contaminated by oil, exhaust gas from vehicles or other oily substances, a treatment agent for this purpose being produced by adding a fluorine-contained surface active agent, which is capable of substantially reducing the surface tension of water or an organic solvent, to a treatment agent according to the first embodiment (a mixture of a water-soluble silicate compound and an organic acid or a salt of an organic acid), and a treatment agent according to the second embodiment that contains a pigment for coloring the inorganic material.

Examples of fluorine-contained surface active agents for this purpose include lithium salts, potassium salts and sodium salts of a perfluoroalkyl (C₂∼C₂₀) carbonic acid; lithium salts, potassium salts and sodium salts of a perfluoroalkyl (C₄∼C₁₂) carbonic acid; ammonium salts of a perfluoroalkyl (C₆∼C₁₀) carbonic acid; monoperfluoroalkyl (C₆∼C₁₀) ethyl phosporic ester; and iodides, bromides and chlorides of a quaternary ammonium salt of perfluoroalkyl (C₄∼C₁₀) carbonic acid.

Then, a treatment agent is produced by adding the fluorine-contained surface active agent selected as above to a mixture comprising an organic acid or an organic acid salt and a water-soluble silicate compound, the fluorine-contained surface active agent added at a ratio appropriate for a degree of contamination by the oily or fatty substance, for example from 0.01 to 0.5 wt% for a non-pigment treatment agent, or from 0.05 to 1.5 wt% for a treatment agent containing a pigment. The aforementioned figures are produced because a mixing ratio of less than 0.01 wt% or 0.05 wt% allows the oily or fatty substance to impair the permeability of the water-soluble silicate compound, while a mixing ratio exceeding 0.5 or 1.5 wt% increases production costs. Therefore, the mixing ratio for a non-pigment treatment agent should be in the range between 0.01 and 0.5 wt%, or more preferably in the range between 0.02 and 0.08 wt%, while the ratio for a treatment agent containing a pigment should be in the range between 0.05 and 1.5 wt%, or more preferably in the range between 0.05 and 1.5 wt%.

In addition to having a great surface activity effect, a fluorine-contained surface active agent mixes well with a combination of a water-soluble silicate compound and an organic acid or a salt of an organic acid without producing bubbles. Thus, without changing the quality of the organic acid, the organic acid salt or the inorganic material, a fluorine-contained surface active agent prevents increase of the viscosity of the same and improves the permeability of the water-soluble silicate compound so that the water-soluble silicate compound is able to permeate the inorganic material even if the surface of the material is contaminated by an oily or fatty substance.

The water-soluble silicate compound may preferably be a combination of a plurality of such silicates; in cases where, for example, sodium silicate (M = sodium) is the principal component, using lithium silicate or potassium silicate together with the sodium silicate quickens the reaction compared with using sodium silicate alone as the water-soluble silicate compound, because lithium silicate and potassium silicate reacts with calcium hydroxide more quickly than sodium silicate does, and H₂O generated during the reaction of the lithium silicate or the potassium silicate functions as a kind of catalyst and accelerates reaction between the sodium silicate and the calcium hydroxide. Should sodium silicate alone be used, reaction between the sodium silicate and the calcium hydroxide is impaired even further when moisture in the inorganic material, such as concrete, disappears naturally in the course of time. Therefore, it is preferable to use sodium silicate in combination with lithium silicate or potassium silicate, which are both more reactive with calcium hydroxide than sodium silicate is. A quantity of lithium silicate or potassium silicate used may preferably be in the range between 1.0 wt% and 60 wt% of the solid weight of sodium silicate. As the reaction proceeds immediately after the treatment operation of the concrete, with H₂O lost through evaporation being replenished by reaction of the lithium silicate or the potassium silicate, the agent thoroughly permeates the concrete so that it will not be washed off the surface of the concrete even if it rains after the application of the agent. It has been found that the invention according to the embodiment is ensured of having a capability of increasing the solidity and strength of concrete, increasing the hardness thereof by 2 or more on the Mohs scale.

In addition to a water-soluble silicate compound, either one of or both an organic acid and an organic acid salt, a fluorine-contained surface active agent and/or a pigment, a treatment agent according to the invention may contain any substance or substances such as those to reduce the kinematic viscosity of the water-soluble silicate compound, those to promote permeation into an inorganic material and dispersing agents for pigments, unless they may change the quality of the inorganic material and/or other components in the treatment agent, or bring about such undesirable effects to the inorganic material as deterioration of the strength, carbonation, invasion of water, or generation of cracks. Examples of typical substances which may be added include sodium tripolyphosphate and other phosphates which can be used as a dispersing agent, a viscosity adjusting agents such as polyethylene gricol, polyacrylamide and polyethylene oxide.

The present invention is applicable to a rocky terrain, stone, rocks or any other calcium-containing inorganic materials provided that the material contains a calcium compound that generates a water resistant inorganic substance through reaction with a water soluble silicate.

Next, explained hereunder is an experimental treatment for preventing the surface deterioration of an inorganic material according to the third embodiment described above, wherein concrete was used as the inorganic material to be treated.

The inorganic material used for this experiment was concrete which had been produced according to the proportions shown in Table 1, with various surface treatment test being conducted by using pieces of this concrete. Each sample piece was produced by forming a piece having dimensions of 20 cm X 20 cm X 3 cm according to the proportions shown in Table 1, placing the piece in the moist atmosphere at 25 °C for two days, submerging them in water at 20 °C for seven days and then drying and curing them in a room at 25 °C and 65% RH.

**Table 1**

| Raw Material | Quantity (Kg/m³) |
|---|---|
| Unit cement* | 180 |
| Calcium carbonate | 120 |
| Fine aggregate | 803 |
| Coarse aggregate | 944 |
| Water | 195 |
| Slump value (cm) | 21 |

| | |
|---|---|
| *Unit cement = a quantity of cement necessary to produce 1m³ of concrete | |

Then, treatment agents shown in Tables 2 and 3 were produced by mixing various water-soluble silicate compounds, organic acids and fluorine-contained surface active agents in appropriate proportions, and each treatment agent was sprayed onto a sample at 250 g/m². Surface characteristics of the respective samples were measured twice: two weeks after the treatment and four weeks after the treatment, results of which were then compared and evaluated. The results are shown in Table 3. In the experiment, FC-430 (the product name) manufactured by SUMITOMO 3M LIMITED and FC-129 (the product name) manufactured by SUMITOMO 3M Limited were used as the fluorine-contained surface active agents. The permeation depth of each water-soluble silicate compound was measured by spraying a phenolphthalein-alcohol solution onto a sectioned surface of the sample piece and ascertaining the location of the red line.

**Table 2**

| AGENT | water-soluble silicate compound (molar ratio) | Organic Acid | | Fluorine-contained surface active agent | |
|---|---|---|---|---|---|
| | | | Quantity (wt%) | | Quantity (wt%) |
| A | sodium silicate (SiO₂/Na₂O=2.1) | - | - | - | - |
| B | sodium silicate (SiO₂/Na₂ O=3.0) | - | - | - | - |
| C | lithium silicate (SiO₂/Li₂O=3.5) | - | - | - | - |
| D | potassium silicate (SiO₂/K₂ O=3.1) | - | - | - | - |
| E | ammonium silicate (SiO₂/(NH₄)₂O=3.0) | - | - | - | - |
| F | Solution A | S-acid | 0.01 | - | - |
| G | Solution B | S-acid | 0.01 | FC-430 | 0.1 |
| H | A-C Mixed solution (A/C=95/5) | acridinic acid | 0.01 | - | - |
| I | A-C Mixed solution (A/C=90/10) | acridinic acid | 0.01 | FC-430 | 0.1 |
| J | Solution E | S-acid | 0.02 | - | - |
| K | Solution E | croconic acid | 0.02 | FC-129 | 0.1 |
| L | Solution A | chloro-succinic acid | 0.2 | - | - |
| M | Solution B | - | - | FC-430 | 0.5 |
| N | Solution H | S-acid | 0.05 | - | - |
| O | Solution H | S-acid | 0.05 | FC-430 | 0.3 |
| P | A-E Mixed solution (A/E=90/10) | chloro-succinic acid | 0.05 | - | - |
| Q | Solution P | chloro-succinic acid | 0.05 | FC-430 | 0.3 |
| R | Solution A | S-acid | 1.0 | - | - |
| S | Solution A | itaconic acid | 1.0 | - | 1.5 |

**Table 3**

| AGENT | Oil Pollution on Surface | Permea-tion Depth (mm) | Surface Hardness (Mohs Scale) | | |
|---|---|---|---|---|---|
| | | | 2 Weeks Later | 4 Weeks Later | |
| | | | | | Water sprayed immediately after application |
| A | -*1 | 0.1 | 3.0 | 3.5 | 3.0 |
| B | - | 0.1 | 3.0 | 3.5 | 3.0 |
| C | - | 0.1 | 3.5 | 3.5 | 3.0 |
| D | - | 0.1 | 3.0 | 3.5 | 3.0 |
| E | - | 0.2 | 3.0 | 3.5 | 3.0 |
| F | - | 2.0 | 4.0 | 4.0 | 4.0 |
| G | - | 2.0 | 4.0∼4.5 | 4.5 | 4.0 |
| H | - | 2.0 | 5.0 | 5.0 | 5.0 |
| I | ○*2 | 2.0 | 5.0 | 5.0 | 5.0 |
| J | - | 5.0 | 6.0 | 6.0 | 5.0 |
| K | ○ | 4.0 | 5.0 | 5.5 | 5.0 |
| L | - | 10.0 | 6.0 | 6.0 | 6.0 |
| M | ○ | 1.0 | 4.5 | 5.0 | 5.0 |
| N | - | 5.0 | 5.0 | 5.0 | 5.0 |
| O | ○ | 5.0 | 4.5∼5.0 | 5.0 | 5.0 |
| P | - | 15.0 | 6.0 | 6.0 | 6.0 |
| Q | ○ | 10.0 | 5.0 | 5.0 | 5.0 |
| R | - | 13.0 | 6.0 | 6.0 | 6.0 |
| S | ○ | 12.0 | 5.5 | | |

| | | | | | |
|---|---|---|---|---|---|
| *1: no oil pollution on the surface | | | | | |
| *2: oil pollution on the surface; a fluorine-contained surface active agent added to the treatment agent. | | | | | |

As is seen from the above results in Tables 2 and 3, adding an organic acid allows a water-soluble silicate compound to permeate concrete well, while the water-soluble silicate compound alone barely permeates further than the surface of the concrete. In cases where the organic acid used was S-acid, which is a polycarboxylic acid, the results were especially good.

It has also been found that adding a fluorine-contained surface active agent when the surface of concrete was contaminated by an oily substance allows a water-soluble silicate compound to thoroughly permeate the concrete. The tests using FC-430 (a product of SUMITOMO 3M LIMITED) produced especially good results.

The results of the tests where water was sprayed immediately after spraying a treatment agent indicate that every sample on which a water-soluble silicate compound alone was applied as in a conventional method has shown a lower surface hardness than that of samples which have not been sprayed with water. This is probably because most of the water-soluble silicate compound failed to permeate the concrete and flowed down off the surface. On the other hand, as the agents containing organic acids demonstrated no decrease in surface hardness even after being sprayed with water, it is evident that the water-soluble silicate compounds have properly permeated the concrete and undergone reaction without flowing down the surface. Therefore, treatment according to the invention reliably prevents surface deterioration even if it rains after the application of the agent.

Next, explained hereunder is an experimental coloring treatment for concrete, which serves as the inorganic material according to the second embodiment described above.

The same concrete as those for the experimental surface deterioration prevention treatment described above was used as the inorganic material for this experiment. Each treatment agent for the experiment was produced by measuring respective quantities of a water-soluble silicate compound and a polybasic acid as shown in Fig. 4, then blending and stirring the materials until dissolved, and subsequently dispersing a designated pigment therein by means of high-speed stirring using a turbine type mixer at 6,000 to 12,000 r.p.m. at a temperature of 25 °C for 10 minutes.

**Table 4**

| AGENT | water-soluble silicate compound (molar ratio) | Polybasic Acid | | Pigment | |
|---|---|---|---|---|---|
| | Type | Type | Quantity | Type | Quantity |
| a | sodium silicate (3.5) | S-acid | 0.02% | Copper phthalocyanine | 3% |
| b | | Sodium S-acid | 0.05 | Copper phthalocyanine | 3 |
| c | | O-acid | 0.02 | Copper phthalocyanine | 3 |
| d | | Sodium O-acid | 0.05 | Copper phthalocyanine | 3 |
| e | | Potassium S-acid | 0.05 | Black iron oxide | 5% |
| f | | Potassium O-acid | 0.05 | Black iron oxide | 5 |
| g | | S-acid | 0.03 | ultramarine | 4% |
| h | | Sodium S-acid | 0.03 | ultramarine | 4 |
| i | Lithium silicate (3.5) | Sodium O-acid | 0.03 | ultramarine'' | 4 |
| j | | Sodium S-acid | 0.05 | Carbon black | 5% |
| k | | S-acid, n-HA | 0.05 | Carbon black | 5 |
| l | | O-acid, n-HA | 0.05 | Carbon black | 5 |
| m | | O-acid, EHA | 0.05 | Copper phthalocyanine | 3% |
| n | Sodium silicate (3.5) | - | 0 | Iron black oxide | 5% |
| o | | - | 0 | Iron black oxide | 5 |
| p | | SDS* | 2.0 | Copper phthalocyanine | 3% |
| q | | SDS | 2.0 | Copper phthalocyanine | 3% |

| | | | | | |
|---|---|---|---|---|---|
| *: commercially available hard-type alkylbenzene sodium sulfonate | | | | | |

First of all, tests were conducted to determine dispersibility of pigments, following the procedure that calls for agitating each sample by using a turbine type mixer at 6,000 r.p.m. at a temperature of 25 °C for 5 minutes, pouring the solution to a depth of 50 mm in a test tube having an inner diameter of 2 cm immediately after the agitation, and leaving the tube undisturbed. The result was evaluated by measuring the time elapsed until the amount of the transparent layer formed at the top reaches 5 mm. The results are shown in Table 5. The quantities shown in the table represent percentages of the quantities of water-soluble silicate compounds. For the purpose of comparison, samples not containing a polybasic acid as well as samples containing commercially available hard-type alkylbenzene sodium sulfonates (SDS) as a dispersing agent were also used.

**Table 5**

| AGENT | Dispersion of Pigment | Permeation Depth of Water-soluble Silicate Compound (mm) | Depth of Pigment Dispersion (mm) | Elution of Pigment (Eye Observation) |
|---|---|---|---|---|
| | Time elapsed for 5-mm of precipitate to form (hr) | | | |
| a | 16.0< | 4.0∼5.0 | 1.0∼2.0 | X |
| b | 16.0< | 4.0∼6.0 | 1.0∼2.0 | X |
| c | 20.0< | 7.0∼9.0 | 3.0∼4.0 | △∼○ |
| d | 20.0< | 7.0∼11.0 | 3.0∼5.0 | △∼○ |
| e | 5.0< | 4.0∼5.0 | 2.0< | △ |
| f | 5.0< | 8.0∼9.0 | 3.0∼4.0 | △∼○ |
| g | 4.0< | 4.0∼6.0 | 1.0∼2.0 | X |
| h | 4.0< | 4.0∼6.0 | 2.0< | △ |
| i | 5.0< | 6.0∼9.0 | 4.0∼5.0 | ○ |
| j | 24.0< | 4.0∼6.0 | 3.0< | △∼○ |
| k | 24.0< | 7.0∼8.0 | 4.0< | ○ |
| l | 24.0< | 8.0∼9.0 | 5.0∼6.0 | ○∼ⓞ |
| m | 24.0< | 8.0∼10.0 | 5.0∼6.0 | ○∼ⓞ |
| n | 0.5< | 0.2∼0.5 | 0.5> | X |
| o | 0.5< | 0.2∼0.5 | 0.5> | X |
| p | 1.0< | 2.0∼3.0 | 0.5> | X |
| q | 1.0< | 2.0∼3.0 | 0.5> | X |

As is seen from the above results in Table 5, agents using polybasic acids are capable of achieving an excellent effect in dispersing pigments, exhibiting far greater dispersibility of pigments than those which do not contain a polybasic acid or using a SDS as a dispersing agent.

It has also been found that using an ethyl hexylamine salt (EHA) with a polybasic acid further increases dispersibility. However, using an n-hexylamine salt (n-HA) with a polybasic acid brought no improvements in dispersibility.

The depth of permeation of each water-soluble silicate compound and dispersion of each pigment are shown in Table 5, the former being measured in the same manner as the experiment for surface deterioration prevention treatment described above: by spraying a phenolphthalein-alcohol solution onto a sectioned surface of each sample. The latter was measured by visually determining the part where the color of the pigment is clearly apparent and measuring its border line.

As is seen from the above results in Table 5, using a polybasic acid permits a water-soluble silicate compound to permeate concrete extremely well. It is also evident that O-acid provides more satisfactory permeation into concrete than S-acid does. Furthermore, it has been proved that adding n-HA or EHA improves permeability even further.

Also shown in Table 5 are results of the aforementioned experiment involving coloring concrete to observe fixation of pigments.

This experiment on fixation of pigments was conducted by spraying 250 g/m² of pigment onto the surface of each concrete sample, letting the samples dry for two hours in a room maintained at 25 °C and 65 % RH, and then submerging them in water at 25 °C for 30 minutes to observe conditions of the water. The conditions were evaluated based on the following four categories:
ⓞ: water completely uncolored because no pigment has seeped out
○: nearly transparent
△: color clearly discernible
X: turbid

As is seen from the above results in Table 5, the samples not containing a polybasic acid became turbid with a large amount of the pigments having seeped into the water. Of the samples containing polybasic acids, some wherein pigments had not permeated deeply became somewhat turbid with pigment having seeped into the water. However, they were far less turbid than those not containing a polybasic acid. The effect of polybasic acid has thus been proved. It has been observed that water-soluble silicate compounds having lithium bases restrained seepage of the pigments more effectively than water-soluble silicate compounds having sodium bases. This is probably because lithium silicate is more reactive than sodium silicate and is therefore faster to fix the pigment. Furthermore, being used together with n-HA or EHA, the lithium silicate allowed a pigment to disperse more deeply so that virtually no seepage of the pigment was observed.

## Claims

1. A treatment agent for treating a calcium-containing inorganic material containing a water-soluble silicate compound and either one of or both an organic acid and a salt of an organic acid.

2. A treatment agent for treating a calcium-containing inorganic material as claimed in claim 1, wherein each of said organic acid and organic acid salt includes two or more carboxyl groups.

3. A treatment agent for treating a calcium-containing inorganic material as claimed in claim 1 or claim 2, wherein said agent contains a fluorine-type surface active agent.

4. A treatment agent for treating a calcium-containing inorganic material as claimed in any one of claims from claim 1 to claim 3, wherein said agent contains a pigment.

5. A treatment agent for treating a calcium-containing inorganic material as claimed in claim 4, wherein each one of the organic acids and the organic acid salts has a basicity of 2 or more.

6. A treatment agent for treating a calcium-containing inorganic material as claimed in claim 5, wherein at least one of said organic acids and organic acid salts is a polybasic acid selected from a group consisting of spiculisporic acid, salts of spiculisporic acid and derivatives of said spiculisporic acid and spiculisporic acid salts.

7. A method of treating a calcium-containing inorganic material, wherein the calcium-containing inorganic material is permeated by an agent for treating a calcium-containing inorganic material as claimed in any one of claims from claim 1 to claim 6 by means of applying or spraying said treatment agent onto the surface of said calcium-containing inorganic material.
